# EUROPEAN PATENT SPECIFICATION

(11) **EP 0 611 978 B1**
(45) Date of publication and mention of the grant of the patent: **31.03.1999**
(21) Application number: 93916178.2
(22) Date of filing: 16.07.1993
(51) Int. Cl.: G02C 1/02

(54) **SPECTACLES**
BRILLEN
LUNETTES

(30) Priority: 17.07.1992 JP 213798/92
(43) Date of publication of application: 24.08.1994
(60) Divisional application: 98109113.5
(73) Proprietor: Murai Co., Ltd., Sakai-gun, Fukui-ken, 919-0595 (JP)
(72) Inventor: MURAI, Masaru, Fukui-shi, Fukui 910 (JP); HYOI, Isao, Sakai-Gun, Fukui 910-02 (JP)
(74) Representative: Klunker . Schmitt-Nilson . Hirsch
(86) International application number: JP9300993
(87) International publication number: WO9402876

(56) References cited:
- WO-A-87/04806
- DE-A- 3 239 699
- DE-A- 3 612 989
- GB-A- 2 645
- JP-A-63 006 521
- JP-U- 2 109 320
- JP-U- 2 149 913
- JP-U-57 112 311
- JP-Y-25 008 216
- US-A- 943 085
- US-A- 1 931 177
- US-A- 2 041 440

## Description

The resent invention relates to a spectacle having lenses supported by spectacle parts other than a rim, in accordance with the preamble of claim 1 and 14.

A spectacle of this type is known from US-A-943 085.

The clamp means comprises a spring, one part of which is inserted into a hole, the other part gripping the edge of the lens.

A further conventional spectacle is disclosed for example in the Japanese Utility Model Laid-open Publication No. HEI 4-61311. Fitting portions or parts having elastic and springy property are formed to end portions of a bridge, an end plate, a pad and the like, and such elastic fitting parts are fitted into holes formed into the lenses and fixed thereto.

In this known art, however, the elastic fitting parts are fitted and fixed to the holes of the lenses by applying pressure, so that the formation of relatively large holes to the lenses are required, thus providing a problem on design. Similar prior art spectacles are known from WO-87/04806 and GB-A-2645.

Furthermore, if the hole is not formed exactly, there is risk of disengaging the spectacle parts from the lenses. If the fitting force is increased, there is the risk of damaging or breaking the lenses. The requirement of the exact working performance will result in worse productivity.

An object of the present invention is to provide a spectacle having spectacle parts directly attached to the lenses, without substantial limitations on the spectacle design, wherein the spectacle can manufactured with relatively low working performance.

To achieve the above object, the present invention is characterized by the features of claim 1 or 14.

Here, the term "clamp" includes snapping and supporting functions, in both cases, one in which a force is applied in the clamp means closing direction to thereby snap the lens and other in which a force is applied to the clamp means opening direction and acting a reaction force of the lens to snap the clamp means.

According to the present invention, the lens is clamped only by the clamp means, so that a precise hole forming working, as in the conventional technique, is not required.

The clamp means is provided with an elastic means for pressing the lens contacting portion of the clamp means against the lens by utilizing the springy elastic property.

The lens contacting portion of the clamp means is treated for increasing the friction resistance thereof.

The working for increasing the friction resistance may be made by making coarse at least one of the contacting surfaces of the clamp means and the lens, forming an irregular surface or applying other frictioning material between the contacting surfaces.

Furthermore, a buffer means for buffering the force transferred from the spectacle part to the lens may be provided between the clamp means and the spectacle part. According to this location, an excessive force is prevented from being applied to the lens and the damage or breaking of the clamp means and the lens can be prevented.

A lens portion clamped by the clamp means is formed to a portion between the lens edge portions or between clamping force receiving portions formed to the lens.

The clamp means may have a structure for clamping the lens from its front and rear surface sides.

It is desired to form the clamping force receiving means as a recess such as hole formed to the lens. It may be possible to form the clamping force receiving means as a protrusion formed to the lens.

The clamp means is provided with a plurality of clamp pieces. It is preferred that at least one of the clamp pieces is endowed with a springy elastic property.

Such a structure may be adapted as that in which the lens is clamped by a clamp piece engaged with the clamping force receiving means formed to the lens and a clamp piece engaged with the edge portion of the lens.

It is effective to form a groove to the edge of the lens with which the clamp piece is engaged.

It may be possible to provide a plurality of clamp pieces to be engaged with a plurality of clamping force receiving portions formed to the lens to thereby clamp a lens portion between the clamping force receiving portions.

It is preferred that the clamping force receiving portion formed to the lens is a hole into which the clamp piece is inserted and fitted.

It is also preferred that there is provided a positioning means for positioning the clamp piece.

The clamp means comprises a pair of clamp pieces connected at one ends thereof so as to provide substantially U-shape, and the clamp means may be fitted to the lens from the rear side of the lens with the opened end side of the clamp pieces directed forward or from the front side of the lens with the opened end side thereof directed rearward.

As the spectacle part, an end member, a temple, a bridge, a pad leg or a hinge means may be utilized.

### Brief Description of The Drawings

Fig. 1 is a perspective view of a spectacle according to one embodiment of the present invention, in which Fig. 1A is a general perspective view of a spectacle, Fig. 1B is a plan view of a main portion of the spectacle, Fig. 1C is a front view of the main portion of the spectacle and Fig. 1D shows another example of an elastic clamp member according to the present invention.

Fig. 2 is a developed view of the main portion of the spectacle.

Figs. 3 to 11 are views representing modified embodiments of the elastic clamp member of Fig. 1.

Figs. 12 and 13 represent further modified embodiments of the elastic clamp member to which hinge means is applied.

Figs. 14 and 15 represent further modified embodiments of the elastic clamp member of Fig. 1.

Figs. 16 to 18 represent further modified embodiments of the elastic clamp members having structures in conformity with the types of the end members.

Figs. 19 and 20 are views for showing clamping force directions different in various structures of the elastic clamp members.

Fig. 21 shows various alternations of the shapes of the holes each formed to the lens into which the elastic clamp member is inserted.

### Best Modes for Embodying The Invention

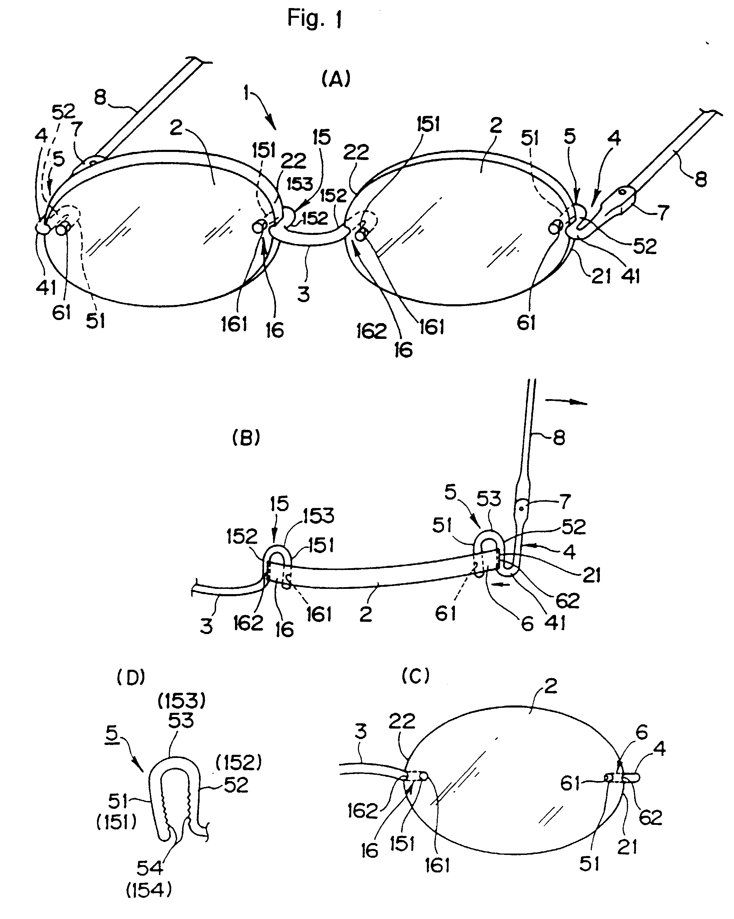

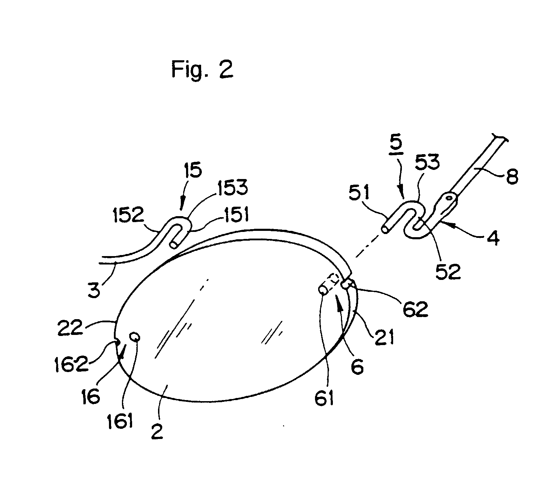

One preferred embodiment of a spectacle according to the present invention will be first described with reference to Figs. 1 and 2, in which a spectacle is denoted by reference numeral 1 which includes two lenses 2 to which a bridge 3 and end members 4 are directly attached as spectacle parts without using any fastening means such as screws, and lenses 2 are supported without using a rim.

The end members 4 are attached to both sides of the lenses and have rear ends attached to temples 8 through hinge members 7. A first clamp member 5 having elastic property is provided to the front end of the end member 4, the first clamp member 5 being bent so as to provide substantially U-shape. This first elastic clamp member 5 is fixed to the lens 2 by clamping a first fixing portion 6 of the lens 2 formed to an outer edge side of the lens 2.

The first fixing portion 6 is formed with a lens portion between a hole 61 formed to the lens surface as a lens holding means and an outer edge 21 of the lens 2. The first elastic clamp member 5 is composed of a first clamp piece 51 which is to be fitted into the hole 61 and a second clamp piece 52 engaging with the outer edge 21 of the lens 2. These first and second clamp pieces 51 and 52 are integrally connected with each other through a connecting piece 53, and in the illustrated embodiment, the connecting piece 53 is positioned at the rear side of the lens 2. It is not necessary to form the hole 61 as a through hole; it may also be formed as a recessed portion or, it may be formed as a protruded portion.

Accordingly, only the end of first clamp piece 51, fitted into the hole 61, of the first elastic clamp member 5 is exposed to the front side of the lens 2. The end member 4 is connected to the second clamp piece 52 through a connecting portion 41 which is bent so as to provide a U-shape, and accordingly, the structure including the end member 4 and the first elastic clamp member 5 provides substantially S-shape. This connecting portion 41 alleviates a force transferring from the temple side to the first clamp member 5, thus preventing that excessive stresses or forces are applied to the lenses.

A groove 62 is formed to the outer edge 21 of the lens 2 with which the second clamp piece 52 of the first clamp member 5 is engaged.

The bridge 3 is provided with second elastic clamp members 15, at its both end portions, which are to be fixed to second fixing portions 16 formed to inner edge sides of the lenses 2.

An hole 161 is formed to the lens 2 at the inner edge side of the lens 2 and the second fixing portion 16 is formed with a lens portion between the hole 161 and an inner edge 22 of the lens 2. The second elastic clamp member 15 is composed of a first clamp piece 151 which is to be fitted into the hole 161 and a second clamp piece 152 engaging with the inner edge 22 of the lens 2. These first and second clamp pieces 151 and 152 constitute opposing portions of the U-shaped second clamp member 15 and connected with each other through a connecting piece 153. The connecting piece 153 is positioned to the rear side of the lens 2, and accordingly, only the end of first clamp piece 151, fitted into the hole 161, of the second elastic clamp member 15 is exposed to the front side of the lens 2.

A groove 162 is formed to the inner edge 22 of the lens 2 with which the second clamp piece 152 of the second clamp member 15 is engaged. It is therefore necessary for the groove 162 to be formed to a portion corresponding to the second clamp piece 152 and to have a corresponding size.

In assembling the spectacle of this embodiment, first with reference to the first elastic clamp member 5, the first clamp piece 51 of the first elastic clamp member 5 provided at the front end of the end member 4 is inserted into the hole 61 of the lens 2 and the second clamp piece of the clamp member 5 is then engaged with the groove 62 formed to the outer edge of the lens 2 to thereby clamp the first fixing portion 6 of the lens 2 by the first and second clamp pieces of the first elastic clamp member 5. The clamping force is due to the springy property of the first elastic clamp member 5. This assembling working is of course done to both the lenses 2 in the same manner.

Next, regarding the bridge 3, first clamp pieces 151 of the second clamp members 15 provided at both the end portions of the bridge 3 are inserted into the holes 161 formed to the inner edge sides of the lenses 2 and the second clamp pieces 152 are then engaged with the grooves 162 formed to the inner edges of the lenses 2.

As shown in Fig. 1D, the first and second clamp pieces 51 and 151 of the first and second elastic clamp members 5 and 15 are formed with burrs 54 and 154 for increasing frictions at the contacting surfaces of the clamp pieces 5 and 15 to the walls of the holes 61 and 161 of the lenses 2, thus the clamp members being firmly fitted in the holes of the spectacle lenses. This modification may be also applicable to the bridge 3. In order to increase the friction force, it may be possible to independently interpose a friction member and it is also possible to adapt other structures.

Furthermore, although not shown, the pad legs of the nose pad may be fixed to the bridge or supported by the lens by providing a clamp member like the bridge.

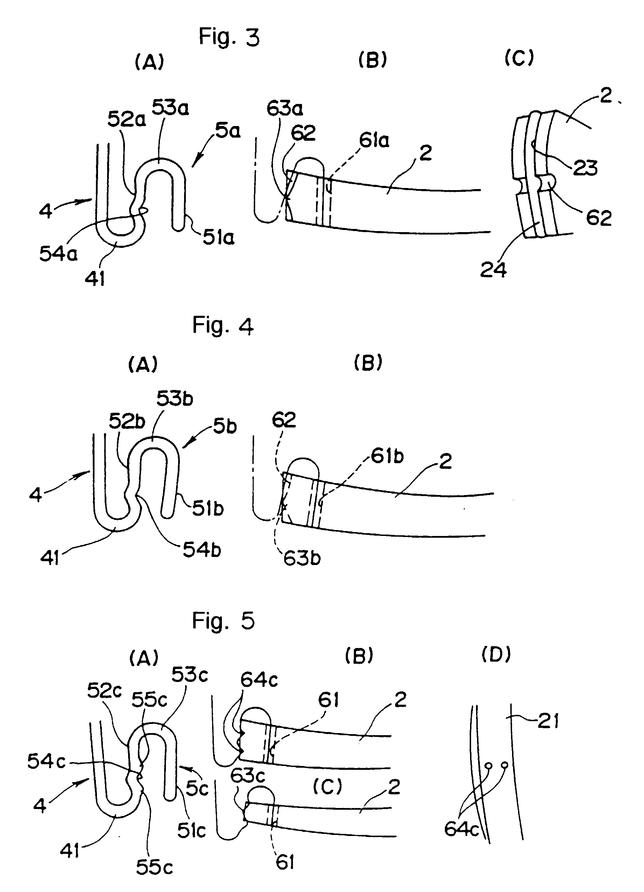

Figs. 3 to 11 show modifications of the first elastic clamp member 5 for the end member 4.

In the following, only the components different from the structure of Fig. 1 are described and like reference numeral with small alphabets are applied to elements or members corresponding to those of Fig. 1 and the explanations thereof are now omitted herein.

First, Fig. 3 shows a modified first elastic clamp member 5a, in which the second clamp piece 52a of the first elastic clamp member 5a is formed to be linearly straight and a recess 54a is formed to the outer edge 21 of the lens 2. The portion of the outer edge 21 corresponding to this recess 54a of the second clamp piece 52a is formed with a protrusion 63a which is to be engaged with the recess 54a for firmly positioning the clamp piece 52a. In the illustrated embodiment, the protrusion 64a is formed to a groove 62a of the lens 2 so as to provide a sharp edge portion. The first clamp piece 51a is parallel to the second clamp pieces 52a with each other. As the positioning means, different from the above, the calking of the front end of the first clamp piece 51a may be adapted or a stopper may be applied.

Further, in place of the formation of the protrusion 63a, as shown in Fig. 3C, a flexible wire-like member 24 such as nylon wire is engaged with a groove formed entirely to the outer periphery of the lens 2. it is possible to mount a decoration member by utilizing the flexible wire-like member 24.

The modifications represented by Figs. 4 and 5 have substantially the same structure for the positioning of the first elastic clamp member.

Namely, in Fig. 4, the first elastic clamp member 5b has a first clamp piece 51b which extends linearly with slight inward inclination towards a second clamp piece 52b to narrow a distance at front ends between the first and second clamp pieces 51b and 52b for ensuring further firm engagement of the clamp member. A hole 61b formed to the lens 3 for the insertion of the first clamp piece 51b has a tapered wall having a like inclination.

In Fig. 5, a first elastic clamp member 5c has a second clamp piece 52c provided with protrusions 55c and 55c between which a recess 54c is formed. This embodiment is particularly suitable for a lens having a relatively large thickness (mainly in the case of concave lens) and in such case, two holes 64c and 64c will be formed to the outer edge of the lens 2 at portions suitable for the fitting of two protrusions 55c and 55c of the second clamp piece 52c, thus firmly clamping the lens.

On the other hand, in the case of the lens 2 having a relatively thin thickness (mainly in the case of convex lens), the lens 2 is fitted into the recess 54c of the second clamp piece 52c with front and rear edge portions of the lens being clamped by the protrusions 55c and 55c, thus increasing the clamping force.

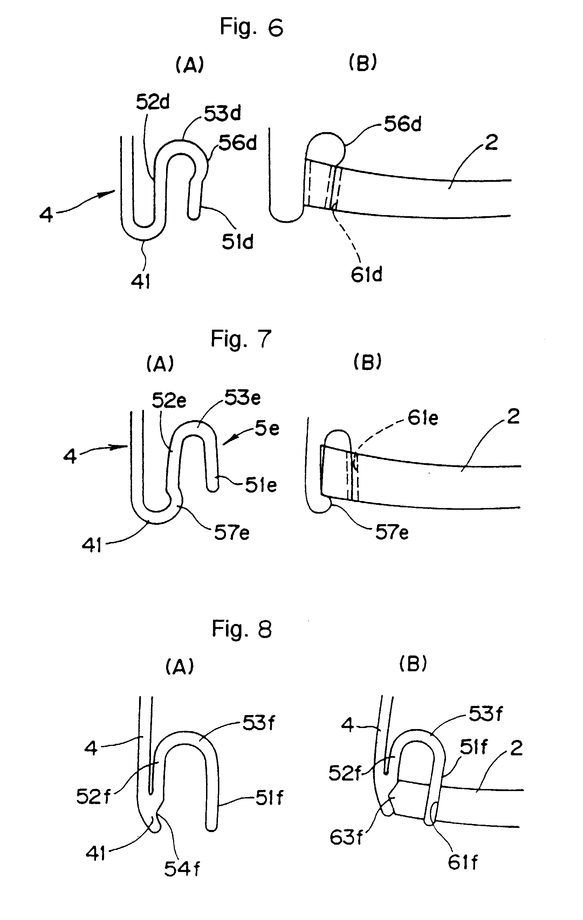

A first elastic clamp member 5d of Fig. 6 has a first clamp piece 51d provided at its root portion with a protrusion 56d for achieving firm engagement with the edge portion of the lens 2 and preventing the lens 2 from being moved inside the first elastic clamp member. Furthermore, like the embodiment of Fig. 4, the first clamp piece 51d has an inclination towards the second clamp piece 52d to reduce an opening distance therebetween to apply a force to the lens 2 rearwardly, thus firmly clamping the lens 2 between the protrusion 56d and the front end portion of the first clamp piece 51d.

In the embodiment of Fig. 7, reversely to that of Fig. 6, a protrusion 57d is formed on a root portion of a second clamp piece 52e contacting the outer edge 21 of the lens 2 on the side of the first clamp piece 51e so that the protrusion 57e is engaged with the lens 2.

A distance between the first and second clamp pieces 51e and 52e has an inclination widening in a direction toward an opening end side, and accordingly, when the first elastic clamp member 5e is inserted into the hole 61 of the lens 2, a force pressing the lens 2 forwardly is applied and the lens 2 is thus engaged with the protrusion 57e, thereby achieving the firm clamping of the lens 2.

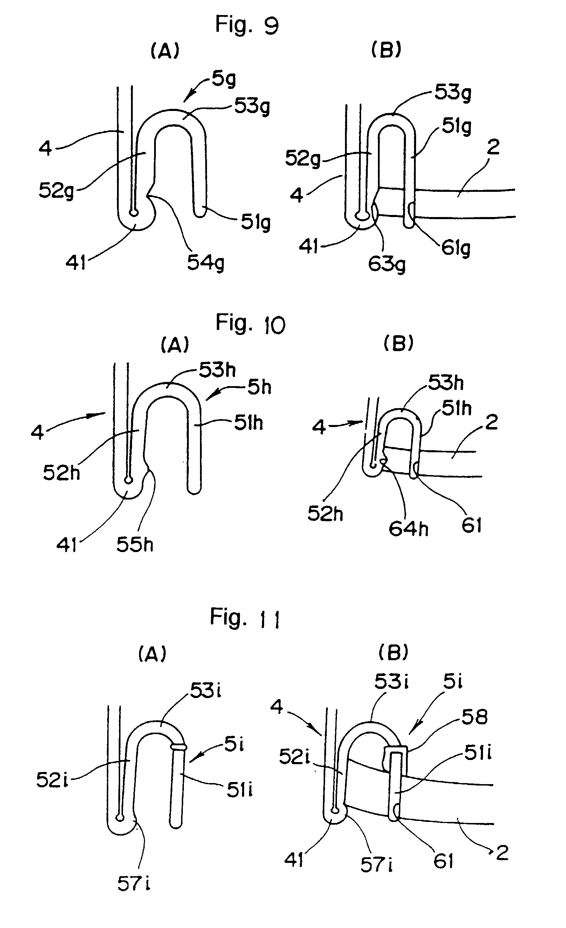

In the embodiments of Figs. 8 and 9, first elastic clamp members 5f and 5g respectively having second clamp pieces 52f and 52g, contacting the outer edge of the lens 21, which are provided with recesses 54f and 54g into which the lens 2 is fitted and fixed. The side surface of the lens 2 is formed with protrusion 63f or 63g which fits into the recess 54f or 54g. In these embodiments, the distance between the end member 4 and the first clamp piece 51f or 51g is made smaller than that between the first clamp piece 51f (51g) and the second clamp piece 52f (52g) to reduce the outward extension of the end member 4 with respect to the lens 2.

In the embodiment of Fig. 10, reversely to that of Fig. 9, a first elastic clamp member 5h is provided with a protrusion 55h to a second clamp piece 52h contacting the outer edge 21 of the lens 2 and a recess 64 into which this protrusion 55h is fitted is formed in the edge of the lens 2. In this embodiment, similar to the embodiments of Figs. 8 and 9, the distance between the end member 4 and the first clamp piece 51h is made smaller than that between the first clamp piece 51h and the second clamp piece 52h to reduce the outward extension of the end member 4 with respect to the lens 2.

The first elastic clamp member 5i of the embodiment of Fig. 11 is an alternation of the embodiment of Fig. 7, in which a fitting piece 58i such as rubber or silicon material is applied to a first clamp piece 51i which is to be inserted into the hole 61 of the lens 2 and other structure is substantially the same as that of Fig. 7 and the lens 2 is firmly fixed to the clamp member by forcing forward the lens 2 through the engagement between the lens 2 and the protrusion 57i of the second clamp piece 52i.

In this embodiment, the distance between the end member 4 and the first clamp piece 51i is made smaller than that between the first clamp piece 51i and the second clamp piece 52i to reduce the outward extension of the end member 4 with respect to the lens 2.

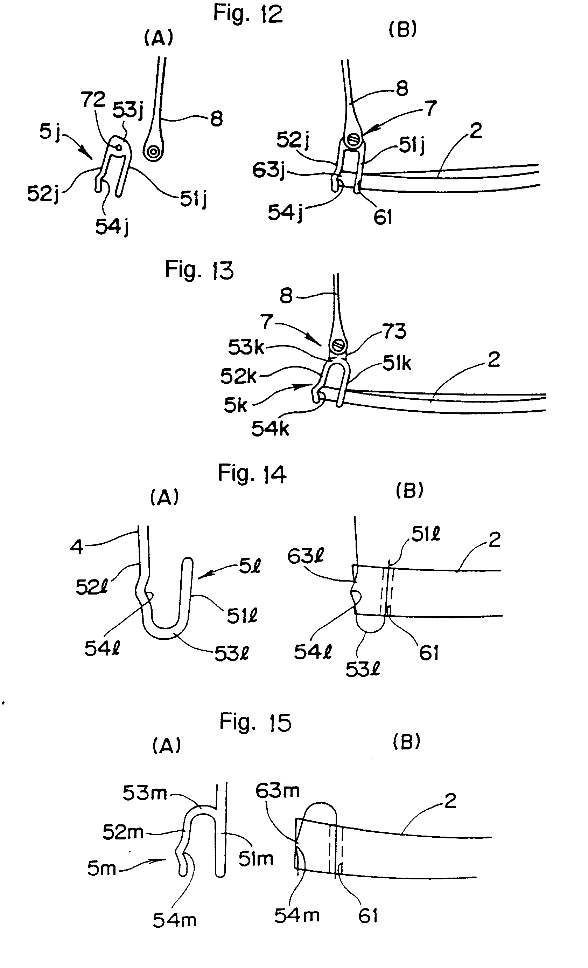

The embodiment of Fig. 12 shows an example of a first elastic clamp member 5j which is provided with a function as a hinge.

Namely, this embodiment is a type in which the first elastic clamp member 5j clamps the lens 2 from the rear side thereof and front end portions of first and second clamp pieces 51j and 52j are opened and rear end portions thereof are connected through a connecting portion 53j to which is formed a pin hole 72 into which a hinge pin 71 is directly inserted. A recess 54j is formed to a portion of the second clamp piece contacting the outer edge 21 of the lens 2 to thereby increase the fastening force of the lens. A sharp protrusion 63j is formed to the edge portion of the lens 2.

The embodiment of Fig. 13 is an alternation of the hinge portion of the embodiment of Fig. 12, in which a projecting piece 73 is formed to a connecting portion 53k of first and second clamp pieces 51k and 52k.

In the embodiment of Fig. 14, a U-shaped first elastic clamp member 5ℓ clamps the lens 2 from the forward side thereof. A recess 51ℓ is formed to a portion contacting the outer edge 21 of the lens 2 to thereby increase the fixing force of the lens 2. A sharp protrusion 63Q is formed to the edge portion of the lens 2.

The embodiment of Fig. 15 has a structure in which a temple is positioned on an imaginary extension line of the hole 61 of the lens 2 and a U-shaped first elastic member 5m is inserted into the hole 61 of the lens 2 from the rear side of the lens 2 to thereby firmly fix the lens 2.

A recess 54m is formed to a portion of a second clamp piece 52m of this first elastic clamp member 5m contacting the edge portion of the lens 2 and a sharp protrusion 63m is formed to the edge portion of the lens 2 to thereby achieve firm engagement of the lens 2.

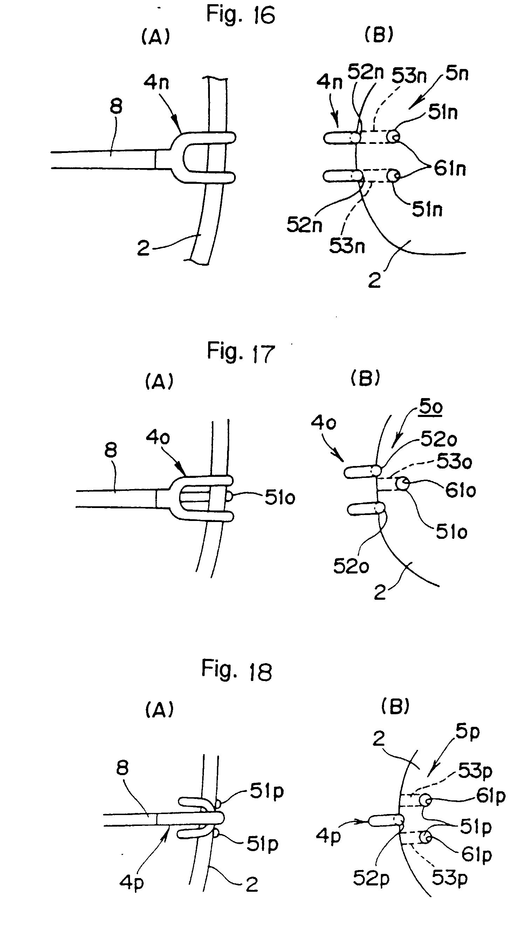

Figs. 16 to 18 represent further embodiments of the first elastic clamp member.

Fig. 16 shows a type in which first elastic clamp members 5n are formed to forked end portions of a forked end member 4n and two holes 61n and 61n are formed to the lens 2 into which first clamp pieces 51n and 51n of the forked end portions of the end member 4n are fitted. According to this embodiment, since the lens 2 is clamped between two holes 61 and the forked end member 4n at two portions, a strong clamping force is applied, thus stably fixing the lens 2.

Fig. 17 shows a type in which an end member 4o is formed with a forked shape and one hole 61o is formed to the lens 2, and a first elastic clamp member 5o has two second clamp pieces 52o connected to the forked end member 4o and one first clamp piece 51o to be inserted into the hole 61o.

Fig. 18 shows a type in which one end member 4p is provided and two holes 61p and 61p are formed to the lens 2, and a first elastic clamp member 5p has one second clamp piece 52p and two first clamp pieces 51p and 51p which are to be inserted into the holes 61p and 61p.

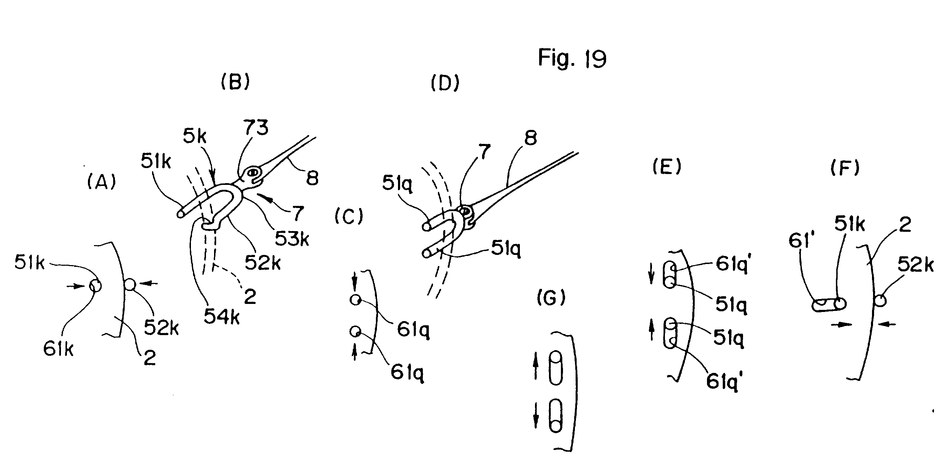

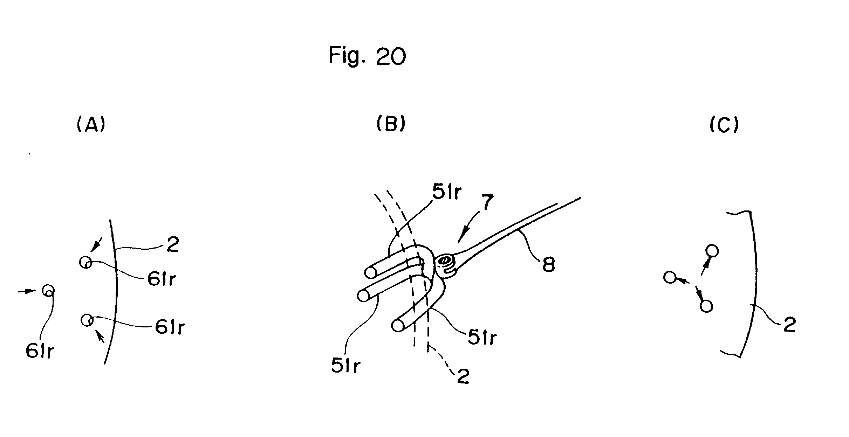

Figs. 19 and 20 are embodiments classified in accordance with the differences of types in consideration of directions of clamping forces.

Fig. 19 is an embodiment corresponding to the first elastic clamp member 5k of Fig. 13 and the clamping force directions of clamp pieces are shown by arrows in Fig. 19A to firmly clamp the lens edge portion from two directions.

Figs. 19C and 19D show types in which a lens portion between two holes 61q and 61q formed to the lens 2 is clamped by a pair of clamp pieces 51q and 51q which are inserted into the holes 61q and 61q, respectively, and the clamping force directions are shown by arrows to clamp the lens portion from vertical direction of the lens 2.

Further, as shown in Figs. 19E and 19F, the holes 61q and 61q may be formed so as to provide elongated hole shapes.

Furthermore, the clamping force direction may be applied to a mutually attracting direction as shown in Fig. 19G.

Fig. 20 shows an embodiment of a type in which the lens 2 is clamped by three clamp pieces 51r, 51r and 51r of a first elastic clamp member 5r. In the illustrated embodiment, the clamp pieces 51r are inserted into three holes 61r formed to the lens 2, but it is of course possible to insert one or two clamp pieces 51r into one or two holes 61r and to engage other one or two clamp pieces 51r with the edge portion of the lens 2. The clamping forces may be applied in attracting directions as shown in Fig. 20A or in opposing directions as shown in Fig. 20C.

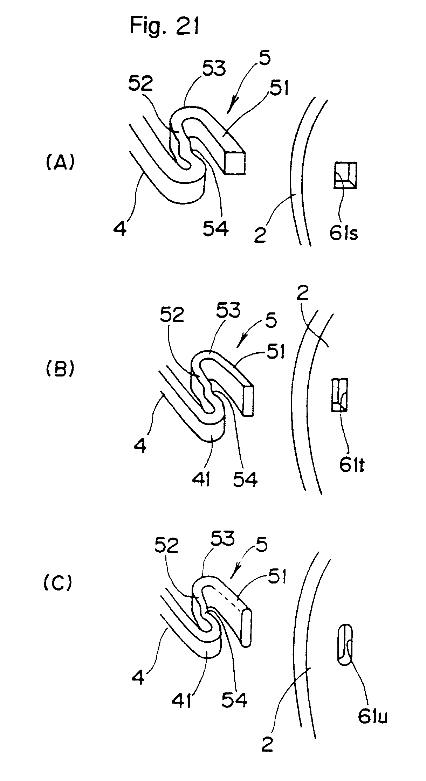

Fig. 21 shows various alternations of shapes of holes to be formed to the lens 2, in which Fig. 21A shows an example of square hole 61s, Fig. 21B shows an example of rectangular hole 61t and Fig. 21C shows an example of rounded elongated hole 61u.

The above embodiments were described with reference to spectacle parts of the end member, the bridge and the hinge, but not limited to them and these embodiments will be applicable to a structure to which the temple is directly attached or a structure attached to a nose pad of the spectacle.

### Possibility of Industrial Usage

According to the present invention, a clamp means is provided for clamping a lens, so that it is not necessary to form a large hole as in a conventional art for fitting a conventional elastic fitting portion, thus eliminating a limitation on design.

Furthermore, since it is also not necessary to precisely work the hole, the productivity of the spectacles can be improved.

## Claims

1. A spectacle having lenses (2) supported by spectacle parts other than a rim wherein the lenses (2) are directly supported by clamp means (5, 5a, 5b, 5c ...; 51, 151, 52 ..) for clamping the lenses (2) and the clamp means is provided with an elastic means pressing a lens contacting portion of the clamp means against the lenses (2) by utilizing spring force of the elastic means, **characterized in that t**he lens contacting portion of the clamp means (5, 5a, 5b, 5c ...; 51, 151, 52) is subjected to a working for increasing the friction resistance by making coarse a surface of at least one of contacting surfaces of the clamp means (5, 5a, 5b, 5c ...; 51, 151, 52) and the lens (2) or by forming an irregular surface portion (54, 154, 54b, 55c; 62, 63, 64 ...) to at least one of the contacting surfaces of the clamp means and the lens (2).

2. The spectacle according to claim 1, wherein a force buffer means (41) for buffering a force transferred from a spectacle part (4) to the lens (2) is disposed between the clamp means (5, 5a, 5b, 5c ...; 51, 151, 52) and the spectacle part (4).

3. A spectacle according to claim 1 or 2, wherein a lens portion of the lens (2) to be clamped by the clamp means (5, 5a, 5b, 5c ...; 51, 151, 52) is a portion between a lens edge portion (21) and a clamping force receiving portion (61) formed to the lens (2).

4. A spectacle according to any one of claims 1 to 3, wherein the lens portion clamped by the clamp means (5n, 5o, 5p) is a portion between a plurality of separated clamping force receiving portions (61n, 61o, 61p) formed to the lens (2).

5. A spectacle according to claim 3 or 4, wherein the clamping force receiving portion formed to the lens is a recess such as a hole (61; 61o, 61n, 61p).

6. A spectacle according to any one of claims 1 to 5, wherein a clamping force is a compression force.

7. A spectacle according to any one of claims 1 to 6, wherein the clamp means (5, 5a, 5b, 5c ...; 51, 151, 52) is provided with a plurality of clamp pieces (51, 52; 51a, 52a; ...) engaged with the lens (2).

8. A spectacle according to claim 7, wherein at least one of the clamp pieces (51, 52; 51a, 52a ...) has a springy elastic property.

9. A spectacle according to claim 7 or 8, wherein the lens is clamped by a first clamp piece (51, 51a ...) engaged with a clamping force receiving portion (61) formed to the lens (2) and a second clamp piece (52, 52a ...) engaged with an edge portion (62, 63 ...) of the lens (2).

10. A spectacle according to claim 9, wherein a groove (62) is formed to the edge portion of the lens (2) to be engaged with the second clamp piece (52a).

11. A spectacle according to claim 7 or 8, wherein a plurality of clamping force receiving portions (61n, 61p) are formed to the lens (2) and a plurality of clamp pieces (51n, 51p) are engaged with corresponding clamping force receiving portions (61n, 61p) to clamp a lens portion between the clamping force receiving portions.

12. A spectacle according to claim 9 or 11, wherein the clamping force receiving portions are holes (61, 61n, 61p) into which the clamp pieces (51n, 51p) are inserted and fitted.

13. A spectacle according to any one of claims 7 to 12, wherein there is further provided a clamp piece positioning means (58).

14. A spectacle having lenses (2) supported by spectacle parts other than a rim, wherein the lenses are directly supported by clamp means (5, 5a, 5b, 5c, ...; 51, 151, 52,...) for clamping the lenses, the clamp means being provided with elastic means pressing a lens contacting portion of the clamp means against the lenses (2) by utilizing spring force of the elastic means, **characterized in that** in order to increase the friction resistance a friction member (54, 154) is interposed between the clamp means and the lens.

15. A spectacle according to any one of claims 1 to 14, wherein the spectacle part is an end member (4).

16. A spectacle according to any one of claims 1 to 14, wherein the spectacle part is a temple (8).

17. A spectacle according to any one of claims 1 to 14, wherein the spectacle part is a bridge.

18. A spectacle according to any one of claims 1 to 14, wherein the spectacle part is a pad leg.

19. A spectacle according to any one of claims 1 to 14, wherein the spectacle part is a hinge means (7).

## Patentansprüche

1. Brille mit Gläsern (2), die von Brillenteilen außer einem Rand gehalten werden, wobei die Gläser (2) direkt von einer Klammereinrichtung (5a, 5b, 5c ...; 51, 151, 52 ...) gehaltert werden, die die Gläser (2) klammert, und die Klammereinrichtung mit einer elastischen Einrichtung ausgestattet ist, die einen Gläserkontaktierteil der Klammereinrichtung unter Ausnutzung von Federkraft der elastischen Einrichtung gegen die Gläser (2) drückt, **dadurch gekennzeichnet**, daß der Gläserkontaktierteil der Klammereinrichtung (5, 5a, 5b, 5c ...; 51, 151, 52) einer Bearbeitung unterzogen ist, die dazu dient, den Reibungswiderstand dadurch zu steigern, daß eine Oberfläche von zumindest einer der Berührungsflächen der Klammereinrichtung (5, 5a, 5b, 5c ...; 51, 151, 52) und des Glases (2) aufgerauht wird, oder daß an zumindest einer der Berührungsflächen der Klammereinrichtung und des Glases (2) ein unregelmäßiger Oberflächenbereich (54, 154, 54b, 55c; 62, 63, 64 ...) gebildet wird.

2. Brille nach Anspruch 1, bei der eine Kraftpuffereinrichtung (41) zum Puffern einer von einem Brillenteil (4) auf das Glas (2) übertragenen Kraft sich zwischen der Klammereinrichtung (5, 5a, 5b, 5c ...; 51, 151, 52) und dem Brillenteil (4) befindet.

3. Brille nach Anspruch 1 oder 2, bei der ein von der Klammereinrichtung (5, 5a, 5b, 5c ...; 51, 151, 52) geklammerter Glasabschnitt des Glases (2) ein Abschnitt zwischen einem Brillenrandabschnitt (21) und einem Klemmkraftaufnahmeabschnitt (61) ist, welcher an dem Glas (2) ausgebildet ist.

4. Brille nach einem der Ansprüche 1 bis 3, bei der der Glasabschnitt, der von der Klammereinrichtung (5n, 5o, 5p) geklemmt wird, ein Abschnitt zwischen einer Mehrzahl getrennter Klemmkraft-Aufnahmeabschnitte (61n, 61o, 61p) ist, die in dem Glas (2) ausgebildet sind.

5. Brille nach Anspruch 3 oder 4, bei der der Klemmkraft-Aufnahmeabschnitt an dem Glas eine Ausnehmung, beispielsweise in Form eines Lochs (61; 61o, 61n, 61p) ist.

6. Brille nach einem der Ansprüche 1 bis 5, bei der eine Klemmkraft eine Druckkraft ist.

7. Brille nach einem der Ansprüche 1 bis 6, bei der die Klemmeinrichtung (5, 5a, 5b, 5c ...; 51, 151, 52) mit mehreren Klemmstücken (51, 52; 51a, 52a; ...) ausgestattet ist, die mit dem Glas (2) in Eingriff stehen.

8. Brille nach Anspruch 7, bei der mindestens eines der Klemmstücke (51, 52; 51a, 52a ...) federelastische Eigenschaften aufweist.

9. Brille nach Anspruch 7 oder 8, bei der das Glas von einem ersten Klemmstück (51, 51a ...), welches mit einem Klemmkraft-Aufnahmeabschnitt (61) an dem Glas (2) in Eingriff steht, und einem zweiten Klemmstück (52, 52a ...), welches mit einem Randabschnitt (62, 63 ...) des Glases (2) in Eingriff steht, festgeklammert ist.

10. Brille nach Anspruch 9, bei der an dem Randabschnitt des Glases (2), der mit dem zweiten Klemmstück (52a) in Eingriff zu bringen ist, eine Nut (62) ausgebildet ist.

11. Brille nach Anspruch 7 oder 8, bei der mehrere Klemmkraft-Aufnahmeabschnitte (61n, 61p) an dem Glas (2) ausgebildet sind, und mehrere Klemmstücke (51n, 51p) mit entsprechenden Klemmkraft-Aufnahmeabschnitten (61n, 61p) in Eingriff stehen, um einen Glasabschnitt zwischen den Klemmkraft-Aufnahrneabschnitten einzuklemmen.

12. Brille nach Anspruch 9 oder 11, bei der die Klemmkraft-Aufnahmeabschnitte Löcher (61, 61n, 61p) sind, in die die Klemmstücke (51n, 51p) eingesetzt und eingepaßt sind.

13. Brille nach einem der Ansprüche 7 bis 12, bei der außerdem eine Klemmstück-Positioniereinrichtung (58) vorgesehen ist.

14. Brille mit Gläsern (2), die von Brillenteilen außer einem Rahmen gehalten werden, wobei die Gläser direkt von einer Klammereinrichtung (5, 5a, 5b, 5c ...; 51, 151, 52, ...) zum Klammern der Gläser gehaltert werden, wobei die Klammereinrichtung mit elastischen Mitteln ausgestattet ist, welche einen Brillenberührungsabschnitt der Klammereinrichtung gegen die Gläser (2) drückt, wozu die Federkraft der elastischen Einrichtung genutzt wird, **dadurch gekennzeichnet**, daß zur Erhöhung des Reibungswiderstands zwischen der Klammereinrichtung und dem Glas ein Reibungsglied (54, 154) eingefügt ist.

15. Brille nach einem der Ansprüche 1 bis 14, bei der der Brillenteil ein Endstück (4) ist.

16. Brille nach einem der Ansprüche 1 bis 14, bei der das Brillenteil ein Schläfenbügel ist.

17. Brille nach einem der Ansprüche 1 bis 14, bei dem das Brillenteil ein Steg ist.

18. Brille nach einem der Ansprüche 1 bis 14, bei dem das Brillenteil ein Padfuß ist.

19. Brille nach einem der Ansprüche 1 bis 14, bei dem das Brillenteil ein Scharnier (7) ist.

## Revendications

1. Une paire de lunettes ayant des verres (2) portés par des parties de lunettes autres qu'une monture, dans laquelle les verres (2) sont directement portés par des moyens formant pince (5, 5a, 5b, 5c ...; 51, 151, 52, ...) pour pincer les verres et dans laquelle les moyens formant pince sont munis de moyens élastiques pressant une partie de contact des moyens formant pince avec le verre en appui contre les verres (2) en utilisant la force de ressort des moyens élastiques, caractérisé en ce que la région de contact des moyens formant pince (5, 5a, 5b, 5c, ...; 51, 151, 52, ...) avec le verre est soumise à un traitement servant à accroître la résistance de frottement effectué en rendant rugueuse une surface d'au moins l'une des surfaces de contact des moyens formant pince (5, 5a, 5b, 5c ...; 51, 151, 52, ...) et du verre (2) ou en formant une région de surface irrégulière (54, 154, 54b, 55c; 62, 63, 64 ...) sur l'une au moins des surfaces de contact des moyens formant pince et du verre (2).

2. La paire de lunettes selon la revendication 1, dans laquelle des moyens d'amortissement de force (41) pour amortir la force transférée d'une partie de lunettes (4) au verre (2) sont disposés entre les moyens formant pince (5, 5a, 5b, 5c ...; 51, 151, 52, ...) et la partie de lunettes (4).

3. Une paire de lunettes selon la revendication 1 ou 2, dans laquelle une région de verre du verre (2) qui doit être pincée par les moyens formant pince (5, 5a, 5b, 5c, ...; 51, 151, 52) est une région située entre une partie de bord (21) du verre et une partie (61) recevant la force de pincement formée sur le verre (2).

4. Une paire de lunettes selon l'une quelconque des revendications 1 à 3, dans laquelle la région du verre pincée par les moyens formant pince (5n, 5o, 5p) est une région située entre plusieurs parties séparées (61n, 61o, 61p) recevant la force de pincement formées dans le verre (2).

5. Une paire de lunettes selon la revendication 3 ou 4, dans laquelle la partie recevant la force de pincement formée dans le verre est un évidement tel qu'un trou (61; 61o, 61n, 61p).

6. Une paire de lunettes selon l'une quelconque des revendications 1 à 5, dans laquelle la force de pincement est une force de compression.

7. Une paire de lunettes selon l'une quelconque des revendications 1 à 6 dans laquelle les moyens formant pince (5, 5a, 5b, 5c, ...; 51, 151, 52) sont munis de plusieurs parties de pince (51, 52; 51a, 52a; ...) en appui contre le verre (2).

8. Une paire de lunettes selon la revendication 7, dans laquelle l'une au moins des parties de pince (51, 52; 51a, 52a ...) a des propriétés élastiques de ressort.

9. Une paire de lunettes selon la revendication 7 ou 8, dans laquelle le verre est pincé par une première partie de pince (51, 51a ...) en appui contre une partie recevant la force de pincement (61) formée sur le verre (2) et par une seconde partie de pince (42, 52a ...) en appui contre une partie de bord (62, 63 ...) du verre (2).

10. Une paire de lunettes selon la revendication 9, dans laquelle une encoche (62) est formée dans la partie de bord du verre (2) dans laquelle la seconde partie de pince (52a) doit être engagée.

11. , Une paire de lunettes selon la revendication 7 ou 8, dans laquelle plusieurs parties recevant la force de pincement (61n, 61p) sont formées sur le verre (2) et plusieurs parties de pince (41n, 51p) sont en appui contre des parties recevant la force de pincement correspondantes (61n, 61p) pour pincer une région du verre située entre les parties recevant la force de pincement.

12. Une paire de lunettes selon la revendication 9 ou 11, dans laquelle les parties de recevant la force de pincement sont des trous (61, 61n, 61p) dans lesquels les parties de pince (51n, 51p) sont insérées et adaptées.

13. Une paire de lunettes selon l'une quelconque des revendications 7 à 12, dans laquelle il est en outre prévu des moyens de positionnement ce partie de pince (58).

14. Une paire de lunettes ayant des verres (2) portes par des parties de lunettes autres qu'une monture, dans laquelle les verres (2) sont directement portés par ces moyens formant pince (5, 5a, 5b, 5c ...; 51, 151, 52, ...) pour pincer les verres et dans laquelle les moyens formant pince sont munis de moyens élastiques pressant une partie de contact des moyens formant pince avec le verre en appui contre les verres (2) en utilisant la force de ressort des moyens élastiques, caractérisé en ce que, pour accroître la résistance de frottement, un organe de friction (54, 154) est interposé entre les moyens formant pince et le verre.

15. Une paire de lunettes selon l'une quelconque des revendications 1 à 14, dans laquelle la partie de lunettes est un organe d'extrémité (4).

16. Une paire de lunettes selon l'une quelconque des revendications 1 à 14, dans laquelle la partie de lunettes est une branche temporale (8).

17. Une paire de lunettes selon l'une quelconque des revendications 1 à 14, dans laquelle la partie de lunettes est une arcade.

18. Une paire de lunettes selon l'une quelconque des revendications 1 à 14, dans laquelle la partie de lunettes est une branche de coussinet.

19. Une paire ce lunettes selon l'une quelconque des revendications 1 à 14, dans laquelle la partie de lunettes est constituée par ces moyens formant charnière (7).
